# EUROPEAN PATENT SPECIFICATION

(11) **EP 4 189 174 B1**
(45) Date of publication and mention of the grant of the patent: **17.07.2024**
(21) Application number: 21752593.0
(22) Date of filing: 22.07.2021
(51) Int. Cl.: E02D 7/22, E02D 13/06, E02D 5/56, E21B 7/02, E02F 3/06, E02F 9/24, E02F 9/26, E21B 7/26, G06N 3/08, G06V 20/10, G06V 20/52, G06F 18/24, G06F 18/2413

(54) **FOUNDATION MACHINE EQUIPED WITH A SYSTEM FOR THE RECOGNITION OF A HUMAN FIGURE**
FUNDAMENTMASCHINE MIT EINEM SYSTEM ZUR ERKENNUNG EINER MENSCHLICHEN FIGUR
MACHINE DE FONDATION ÉQUIPÉE D'UN SYSTÈME DE RECONNAISSANCE D'UNE FIGURE HUMAINE

(30) Priority: 29.07.2020 IT 202000018340
(43) Date of publication of application: 07.06.2023
(73) Proprietor: SOILMEC S.P.A., 47522 Cesena (FC) (IT)
(72) Inventor: FONTANA, Pietro, 47522 Cesena (FC) (IT); BALSAMINI, Guglielmo, 48121 Ravenna (RA) (IT); BERARDI, Luca, 44011 Argenta (FE) (IT)
(74) Representative: Torredimare, Luca
(86) International application number: PCT/IB2021/056624
(87) International publication number: WO 2022/023894

(56) References cited:
- EP-A1- 3 534 294
- GB-A- 2 522 616
- US-A1- 2015 269 427

## Description

### Technical field

The present invention relates to a machine configured for drilling the ground in order to build structural foundation elements, e.g. piles for a new deep foundation or piles for propping up an existing foundation or the support layer of a shallow foundation, or in order to make retaining elements in the ground, e.g. earth retaining walls or waterproofing bulkheads.

### Background art

Machines commonly known as foundation machines are typically employed in a building yard environment and are composed of a base machine, a mast and an operating equipment. The base machine comprises a structural frame and a movable assembly, typically an undercarriage, mechanically connected to each other. On top of the structural frame there are the prime mover, typically a Diesel engine, which supplies the necessary power to all devices of the machine, the hydraulic and electric systems, and one or more control units, typically PLCs, which, together with suitable input/output modules, sensors and electromechanical devices, permit controlling the machine. In addition, in order to ensure machine stability, a suitably heavy ballast is mechanically connected to the structural frame. The movable assembly is driven by an actuation device, typically a gear motor, so that the foundation machine can be translatably moved, and is braked by a braking device, typically an overcenter valve, for braking and stopping such translatory movement. In addition, in order to hold the movable assembly in the stop position, another braking device is included, typically consisting of a mechanical parking brake. The mast, i.e. a structural element having a lattice or boxed construction and a long extension, even more than twenty meters, is mechanically connected to the frame on the side opposite to the ballast by means of a kinematic mechanism or a pin hinge, and performs the function of mechanically supporting and also, in some types of foundation machines, guiding an operating equipment designed to work the ground according to a given processing technology. Such mast is driven by an actuation device, e.g. one or more hydraulic cylinders, or by the gear motor of a hoist, for the purpose of making a swing movement relative to the frame in order to switch from a transport position, in which the mast is arranged horizontal to minimize the machine height, to a working position, in which the mast is erect and substantially vertical to support the operating equipment while working the ground. The mast is braked by a braking device, typically an overcenter valve acting upon the hydraulic cylinders or acting upon the hydraulic gear motor of the hoist, in order to brake and stop such traverse movement while keeping the mast in the erect working position with a desired angle relative to the direction perpendicular to the ground. When the mast is driven by the gear motor of a hoist, there is also an additional braking device, typically a mechanical parking brake, for holding the mast in the stop position.

By way of example, foundation machines known in the art as "drilling machines" can be used for making a large-diameter hole in the ground, which is then filled with cement mixture in order to obtain, when the latter has hardened, a deep foundation pile. Drilling machines are prearranged for fitting various types of interchangeable equipment, such as, for example, a drilling tool, usually a bucket or a drill bit, mechanically connected to telescopic rods called "kelly bars" or as a single "continuous flight auger" or "soil displacement" drilling tool. A drilling head, called "rotary", is mechanically connected, in a guided manner, to the mast and is mechanically connected to the interchangeable equipment in order to impart thereon, by means of an actuation device, typically a gear motor, a rotary motion, thereby applying to the interchangeable equipment, during the working phase, a torque of such intensity as to overcome the resistance of the soil and drill the hole. By means of an additional actuation device, typically a hydraulic cylinder of a gear motor driving a first hoist, it is possible to cause the rotary to make a guided sliding movement along said mast, so that the rotary will apply to the tool, during the working phase, a thrust force of sufficient intensity to generate enough contact pressure between the tool and the soil. The interchangeable equipment is mechanically associated with the boxed mast, in a direct manner, by means of a rope of a second hoist that supports the interchangeable equipment on the pulleys installed at the top of the mast, and moves the equipment with respect to the mast along the longitudinal direction of the hole by means of an actuation device, typically a gear motor of the hoist itself. In particular, when the drilling machine is working the soil by using a bucket or a drill bit as interchangeable equipment, the actuation device has to cyclically lift up the tool from the bottom of the wellbore being drilled in order to allow discharging the drilled and stored earth at ground level. After this discharging operation, the actuation device lowers the tool along the longitudinal direction of the hole in order to bring it again in contact with the soil and resume the drilling, until the desired depth is reached.

In addition, such drilling machines can be used for works intended to improve the mechanical characteristics of the soil and make it suitable for supporting the support layer of a shallow foundation. Drilling machines are prearranged for fitting various types of interchangeable equipment, referred to as "jet grouting" or "injection" equipment. Such type of interchangeable equipment is designed to eject pressurized fluid jets and is mechanically connected to the rotary to be rotatably moved while injecting jets of cement mixture into the soil, so that, after the latter has hardened, a soil reinforcement will be obtained which will be similar to a foundation pile in shape.

By means of the actuation device that imparts on the rotary a guided sliding motion along the mast, it is possible, during the earth working phase, to move the jet grouting equipment relative to the mast so as to lower it into the soil to the desired depth. The term "operating equipment" of a foundation machine of the type called "drilling machine" will refer herein to the assembly composed of any such interchangeable equipment and the rotary. Such operating equipment is driven by the actuation device, typically a gear motor, of the rotary, so that the interchangeable equipment will make the soil drilling movement, driven by a hydraulic cylinder or a gear motor of a hoist, while moving relative to the mast until it reaches the desired depth in the soil. In particular, the operating equipment of a foundation machine of the type called drilling machine is mechanically associated with the mast both by means of the rope that supports the interchangeable equipment on the pulleys at the top of the mast and by means of the guided mechanical connection between the rotary and the mast. As a further example, foundation machines known in the art as "diaphragm wall excavating machines" can be used for making rectangular-section excavations to be filled with cement mixture in order to obtain, after the latter has hardened, earth retaining walls or waterproofing bulkheads. Diaphragm wall excavating machines are prearranged for fitting various types of interchangeable equipment, such as, for example, rotary drums with excavating teeth, in which case the interchangeable equipment is referred to as "cutter", or an excavating tool with mobile clamshells, in which case the interchangeable equipment is referred to as "grab". In both cases, the interchangeable equipment is mechanically associated, in a direct manner, with the lattice mast by means of a rope of a hoist that supports the interchangeable equipment on the pulleys installed at the top of the mast, and that moves the equipment relative to the mast along the longitudinal direction of the excavation by means of an actuation device, typically a gear motor, of the hoist itself. The interchangeable equipment is driven by an additional actuation device, e.g. a gear motor driving the rotary drums of a cutter or a hydraulic cylinder closing the mobile clamshells of a grab, to make a soil working movement and carry out the excavation. In addition, such diaphragm wall excavating machines can be used for working the earth in order to improve the mechanical characteristics of the soil, for the purpose of making it more suitable for supporting the support layer of a shallow foundation. Diaphragm wall excavating machines are prearranged for fitting various types of interchangeable equipment, referred to as "dynamic compaction" equipment, designed to process the soil in such a way as to make it more compact. For example, the dynamic compaction interchangeable equipment may be a steel mass mechanically associated with the lattice mast, in a direct manner, by means of a rope of a hoist that, during a first stage, lifts up the mass from the ground to a height close to the top of the mast by means of a gear motor driving such hoist and, during a second stage, moves the equipment so that it will free-fall under its own weight, thus impacting the ground with high energy and compacting the soil. The term "operating equipment" of a foundation machine of the type called "diaphragm wall excavating machine" will refer herein to any such interchangeable equipment. From the examples described herein, a person skilled in the art will understand that said foundation machine may be any machine typically included in the EN16228 product standard series.

The foundation machines known in the foundation field are provided with a control assembly, usually a control cabin or a remote control, comprising control devices, typically joysticks and/or pedals and/or levers and/or push-buttons and/or potentiometers and/or graphic human-machine interfaces also known as "HMIs", which are physically actuated by the machine operator to control the movements of the machine. For example, joysticks are operated manually by the operator to change their inclination relative to the neutral idle position to an angle indicative of the desired command intensity, or pedals are pressed by the operator's foot to cover a travel indicative of the desired command intensity. In particular, such control devices generate operator control signals whose intensity, i.e. value, is based on the intensity of the physical actuation exerted by the operator. In addition, the control devices are connected, via a signal connection, to a machine control system, typically consisting of a PLC and hydraulic and electric systems, so that said control system will receive the operator control signals and send them, after appropriate processing, to the actuation devices and braking devices involved in the movements that the operator wants to control by physically actuating the control devices. The actuation devices and the braking devices for the various movements of the machine are therefore configured to exert an action, i.e. a force and/or a torque, respectively for actuating or braking, whose intensity will depend on the intensity of a control signal received by such devices. In particular, the actuation devices and the braking devices exert their respective actions with an intensity that is dependent on the intensity of the control signal that is generated by the operator, as the latter physically actuates the control devices, and that is sent from the control system to the actuation devices and braking devices. The actuation and braking devices are arranged on the machine in such a way as to be mechanically associated with respective moving parts of the machine, for the purpose of applying thereto the actuation action for setting them in motion or the braking action for braking such motion. If the control assembly is a cabin, it is mechanically connected to the structural frame of the base machine, in addition to being connected to the control system via the signal connection of its control devices. The structural frame has, when viewed from above, a substantially rectangular shape, i.e. with four sides meeting each other at as many vertices. In particular, the structural frame has substantially opposite first and second sides constituting the two side panels of the machine, a third side constituting the front side of the machine, in the proximity of which the mast is connected, and a fourth side, substantially opposite to the third one, which constitutes the rear or tail side of the machine, in the proximity of which the ballast is mechanically connected. In particular, a cabin is mechanically connected to the structural frame in a front position, i.e. in the front zone of the machine, and in a lateral position, i.e. along the first side. In fact, its position at the front allows the operator, who sits in the control seat of the cabin, to have a direct view of the operating equipment while working the earth, and its lateral position prevents such direct view from being excessively obstructed by the presence of the mast, with which the operating equipment is mechanically associated.

If the control assembly is a remote control or a mobile device, e.g. a tablet, it is only connected to the control system of the machine via the signal connection, whether wired or wireless, of its control devices.

During a drilling operation using a bucket or a drill bit and during an excavating operation using a grab, the foundation machine operator periodically has to physically actuate the control devices in order to lift the interchangeable equipment from the bottom of the borehole or excavation and bring it up to ground level for the purpose of discharging the excavated earth from the equipment. In order to be able to discharge the earth in an area far enough from the hole or the excavation under way, in the foundation machines known in the art the structural frame of the base machine is mechanically connected to the movable assembly in such a way that it can rotate relative thereto about an axis of rotation R by means of a slewing ring actuated by an actuation device, typically a gear motor. Said axis of rotation R coincides, therefore, with the axis of such slewing ring. In particular, defining a plane passing through axis of rotation R and the barycentric axis of the mast, it is to be understood that the first and second sides lie in opposite half-planes with respect to said plane. In addition, defining a plane orthogonal to the above plane, it is to be understood that the third and fourth sides lie in opposite half-planes with respect to this latter plane.

The gear motor that drives the slewing ring exerts the action of actuating the rotational movement of the frame relative to the movable assembly according to a control signal physically generated by the operator by means of the control devices. Once the earth has been discharged, the operator actuates the control devices again to make the rotational movement in the opposite direction and bring the interchangeable equipment back in proximity to the hole or excavation bottom, so that the earth working activity can continue. Before making both such rotational movements of the structural frame relative to the movable assembly, the operator must visually monitor the whole field of view in the proximity of the foundation machine in order to make sure that there are no people, e.g. an assistant, near the machine and avoid or prevent a person in the vicinity from being hit by a part of the machine, which may result in the person being crushed against walls that may be present near the drilling or excavation area. In fact, although forbidden and regulated by specific procedures, it is theoretically possible that an assistant might come close to the machine in order to check the earth processing work or clean the processing area from any excess earth after the earth stored in the equipment has been discharged. In particular, during the relative rotational movement the four vertices of the structural frame are those lateral and rear parts of the machine which are farthest from the axis of rotation R, i.e. they are substantially the outermost parts of the machine at the sides and at the rear, while the interchangeable equipment constitutes that front part of the machine which is farthest from the axis of rotation R, i.e. it is substantially the outermost part of the machine at the front. It follows that, during the relative rotational movement of the structural frame, such spots are the areas where the risk of a person in the vicinity of the machine being hit or crushed is highest.

Due to the considerable dimensions of the foundation machine, it is impossible for the operator to have a direct view of the whole field of view that needs to be monitored in order to be able to make such rotational movement in safe conditions. As a matter of fact, because the cabin is connected to the frame in the front region in proximity to the mast, i.e. in a very forward position, and because the control station where the operator is seated as he physically actuates the control devices is oriented towards the interchangeable equipment to provide the operator with a direct view of such equipment, it is impossible for the operator to have a direct view of the lateral field of view behind his control station along the first side of the frame, near which the cabin is connected. In addition, because the structural frame is fitted, all along its perimeter, with enclosures, doors, walkway surfaces that completely obstruct the view but are necessary to protect the systems of the machine while at the same time allowing access to the same for maintenance and inspection, it is impossible for the operator to have a direct view also of the lateral field of view behind his control station along the second side of the frame, substantially opposite to the first side. Lastly, it is impossible for the operator to have a direct view also of the rear field of view behind the fourth side of the frame, because it is behind his control station and the view is obstructed by the ballast. In brief, the operator only has a direct view of the front field of view of the machine, i.e. the field of view that includes the interchangeable equipment, although such field of view may be partially obstructed by the mast.

In order to provide the operator with an indirect view of the lateral field of view along both side panels, i.e. along the first and second sides of the structural frame, the prior-art foundation machine is equipped with rear-view mirrors mechanically associated with the structural frame in proximity to the two vertices of the front side and so oriented as to reflect towards the operator seated in the control seat of the cabin the respective lateral fields of view along the respective side panels of the machine. In particular, the rear-view mirror that reflects the lateral field of view along the first side may be mechanically associated with the frame in a direct manner in proximity to one of its vertices, by means of a mechanical connection with the frame itself or with any element integrally fixed thereto, e.g. enclosures, doors, walkway surfaces, or it may be mechanically associated with the frame in an indirect manner by means of a mechanical connection with the cabin in proximity to one of its vertices.

The prior-art foundation machine equipped with rear-view mirrors associated therewith in proximity to the vertices of the structural frame has several drawbacks. In the first place, since such mirrors are associated with the two vertices of the front side and since the frame has large transversal dimensions, i.e. it is very wide, the operator sitting in the control seat in the cabin must alternately look at one mirror at a time and, consequently, it is impossible to simultaneously monitor the fields of view along more than one side of the frame, e.g. the lateral fields of view along both side panels of the machine. For the same reason, it is also impossible for the operator to monitor the front field of view while he is looking at a mirror for monitoring the lateral field of view along one side panel. Therefore, although the operator will visually check the field of view, in order to make sure that there are no people around, both before and during the execution of the relative rotational movement, it will still be possible that, at some instant, a person may walk towards the side opposite to the one being currently monitored by the operator, or towards the interchangeable equipment while the operator is monitoring the lateral field of view along one side panel, so that a risk of such person being hit or crushed may arise.

In the second place, due to the considerable width of the frame and the lateral position of the cabin on the frame, the mirror reflecting the lateral field of view along the second side, i.e. the one opposite to the side along which the cabin is connected, turns out to be quite far from the control station, so that it is difficult for the operator to have a detailed view of the lateral field of view being reflected by such mirror. In addition, foundation machines produce vibrations of the structural frame, and hence of the rear-view mirrors mechanically associated therewith, thus making even worse the vision of the lateral field of view reflected by the mirror which is farther from the control station.

In the third place, because of the dirt that is typically found in a building yard environment, such rear-view mirrors may get soiled or stained to a point that they can no longer reflect the whole field of view that needs to be monitored, or may get damaged and cracked, resulting in geometric distortion of the reflected field of view. Such circumstances may dangerously jeopardize the operator's visual monitoring ability, but he may be unaware of the situation or even ignore it and continue the rotational movement without having first solved the problem, thus increasing the risk of hitting or crushing a person.

Moreover, foundation machines have to be used on multiple daily shifts, and therefore also in conditions of poor natural lighting, e.g. when working at night, and in geographical areas with different environmental contexts, and therefore also in conditions of strong reflected sunlight, e.g. when working near a watershed or on snowy terrain. In both cases, glares or light changes may be produced, temporarily making the visual monitoring by the operator unreliable.

Lastly, the prior-art foundation machine equipped with rear-view mirrors suffers from a further problem, in that it requires physical intervention by the operator for braking the machine to a stop in the event that a person comes dangerously close to the machine while the movement is being executed. In such a case, in fact, it is necessary that the operator takes action by physically actuating the control devices with such intensity as to send to the braking device that brakes the relative rotational movement an operator control signal having sufficient intensity to exert a braking action that will stop the relative rotational movement within a sufficiently short space to avoid hitting or crushing a person.

Such braking action is strictly dependent on the operator's reaction time and physical actuation intensity, and it is therefore possible that the swiftness and intensity of such physical actuation of the control devices will not be sufficient to avoid hitting or crushing the person.

When the earth processing work is completed, because the desired drilling or excavation depth has been reached or because the desired mechanical characteristics of the soil have been attained, the operator of the foundation machine must translatably move the machine in order to re-position it in an area where other work will have to be carried out. To do so, the operator physically actuates the control devices in order to execute a reverse translatory movement of the foundation machine and move away from the area just processed. Prior to making such reverse translatory movement, the operator must visually monitor the rear field of view near the rear or tail side of the machine, i.e. in the proximity of the ballast, to make sure that there are no people, e.g. an assistant or a service technician, near the machine and avoid or prevent hitting or crushing them. In particular, the operator must monitor both the rear field of view behind the ballast and the rear field of view under the ballast, i.e. under the frame. In fact, although regulated by specific procedures, it is theoretically possible that a service technician may come close to the rear part of the machine in order to carry out maintenance or inspection work when the machine is off, e.g. in order to visually inspect the gear motor that drives the movable assembly, which is substantially located under the ballast and the structural frame. Since it is impossible for the operator to have a direct view of both the rear field of view behind the ballast, because the view is obstructed by the ballast itself, and the rear field of view under the ballast and under the frame, because the view is obstructed by the structural frame, the operator will have to use one or more standard indirect-vision systems, e.g. closed-circuit optical systems, possibly with the help of an assistant who, standing in the vicinity of the machine, will visually monitor the rear part of the machine and guide the operator, by means of gestures, during the reverse translatory movement. The use of standard indirect-vision systems has some drawbacks similar to those already described with reference to rear-view mirrors. Firstly, the operator can only monitor one field of view at a time, and therefore it may happen, for example, that a person enters the field of view behind the ballast while the operator is visually monitoring the field of view under the ballast. Secondly, standard indirect-vision systems may get soiled or stained to a point that they can no longer show the entire field of view that needs to be monitored, thus dangerously jeopardizing the operator's monitoring ability, while the operator may be unaware of it or even ignore such circumstance. Lastly, standard indirect-vision systems are also affected by the additional problem that they require physical intervention by the operator for braking the machine to a stop, and it is therefore possible that the swiftness and intensity of the physical actuation of the control devices will not suffice to avoid hitting or crushing the person.

The use of an assistant visually monitoring the rear field of view of the machine and guiding the operator by means of gestures during the reverse translatory movement has several drawbacks.

In the first place, the presence of a person near an operating machine is *per* se a dangerous condition that should be avoided whenever possible.

In the second place, the visual monitoring of the rear field of view of the machine by the assistant may not be completely reliable, because under the ballast and under the structural frame there may be areas with reduced visibility when viewed from a point of view not located under the frame.

In the third place, even if the assistant detects the presence of a person in proximity to the rear side of the frame, the fact that such situation must be communicated to the operator by means of gestures may lead, due to the high noise produced by the foundation machine and by the building yard environment, to dangerous communication misunderstandings.

Lastly, even if the operator correctly interprets, from the assistant's gestures, the instruction to stop the reverse translatory movement, the braking action will still be mainly determined by the operator's reaction time and physical actuation intensity, and it will nevertheless be possible that the swiftness and intensity of the physical actuation of the control devices will not be sufficient to avoid hitting and crushing the person. It is known from GB2522616A a foundation machine configured for drilling the ground for structural foundation elements or retaining elements according to the preamble of claim 1.

### Summary of the invention

In light of the problems suffered by the prior-art foundation machine, it is one object of the present invention to provide a foundation machine which is safer to operate, for the purpose of preventing and avoiding hitting and/or crushing a person standing in the vicinity of the machine during the execution of a movement of the same.

It is a further object to provide a method for controlling a foundation machine.

These and other objects of the present invention are achieved through a foundation machine as set out in claim 1.

It is understood that the appended claims are an integral part of the technical teachings provided in the following detailed description of the present invention. In particular, the appended dependent claims define some preferred embodiments of the present invention that include some optional technical features.

### Brief description of the drawings

The features and advantages of a foundation machine according to the present invention will become more apparent from the following non-limiting description provided by way of example with reference to the annexed schematic drawings, wherein:
- Figure 1 is a side view of the foundation machine according to a first embodiment of the present invention;
- Figure 2 is a plan view of the foundation machine in accordance with a first embodiment of the present invention, shown with the structural frame rotated with respect to the forward direction of the movable assembly;
- Figure 3 is a side view of the foundation machine according to a variant of the first embodiment of the present invention;
- Figure 4 is a block diagram that shows a video camera, a control system, a control assembly, an actuation device, a braking device, a video modulator, a video recorder and a display comprised in the foundation machine according to one embodiment of the present invention;
- Figure 5 is a block diagram that represents processing devices comprised in the electronic processing system of the foundation machine according to one embodiment of the present invention;
- Figure 6 is a plan view of the foundation machine in accordance with a second embodiment of the present invention, shown with the structural frame rotated with respect to the forward direction of the movable assembly.

### Detailed description of the invention

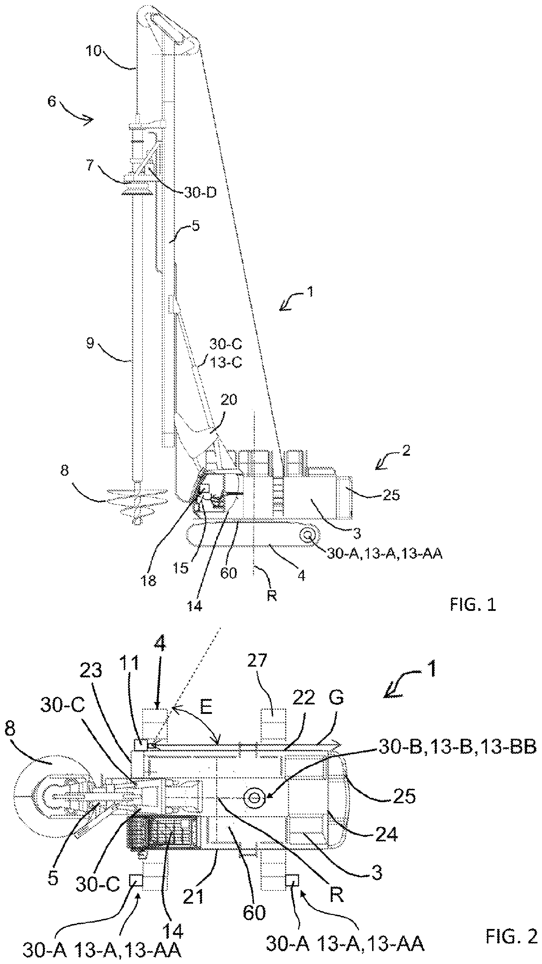

With reference to Figures 1, 2, 3 and 6, there is shown a foundation machine according to the present invention, designated as a whole as 1, configured in accordance with a first embodiment thereof.

Foundation machine 1 is configured for drilling the ground for structural foundation elements or retaining elements, said machine comprising:
- a base machine 2 comprising a structural frame 3 and a movable assembly 4 for moving machine 1 on the ground;
- a mast 5, mechanically connected to base machine 2, whereon an operating equipment 6 is adapted to be mounted in order to drill the ground;
- at least one video camera 11, mounted to base machine 2 and so oriented as to frame a field of view to be monitored;
- a control system operatively connected to the at least one video camera 11 in order to receive a signal representative of images acquired by video camera 11, said foundation machine being characterized in that said control system comprises a neural network trained to recognize a human figure in the images acquired by video camera 11, for recognizing when said at least one video camera 11 is framing a human figure in the monitored field of view; wherein, if the neural network recognizes a human figure, the control system is configured for having foundation machine 1 perform some predetermined functions.

Merely by way of non-limiting example, the foundation machine shown in the drawing is a "drilling machine" configured for drilling holes in the soil for foundation piles, and comprises a base machine 2, a mast 5 and an operating equipment 6. Base machine 2 comprises a structural frame 3 (which, in particular, is or comprises a tower, conveniently a rotary tower) and a movable assembly 4 mechanically connected to each other, preferably in a rotatable manner (in particular about an axis R which is substantially vertical, i.e. perpendicular to the ground), e.g. by means of a slewing ring 60. Movable assembly 4 is adapted to stay in contact with the ground to move machine 1. Movable assembly 4 shown in the figures is an undercarriage, in particular a tracked undercarriage (in the drawings, numeral 27 designates the tracks); alternatively, the undercarriage may comprise wheels adapted to rest on the ground. In this description, reference may be made, without distinction, to either an "undercarriage" or a "movable assembly 4", without nevertheless limiting the scope of the invention. In particular, structural frame 3 is very stiff to be able to withstand, with just small deformations and movements, the loads imposed on machine 1 during the drilling operations, and is designed to house a Diesel engine, a central control unit, typically a PLC, and the hydraulic and electric systems that allow delivering the power generated by the Diesel engine to all the devices of the machine, and also suitably controlling the movements of said machine. The term "mast" 5 may also include an arm, generally a lattice arm, in particular when machine 1 is a diaphragm wall excavating machine.

Machine 1 conveniently comprises at least one first engine, e.g. an internal combustion engine, which outputs the power required by all the devices of machine 1 and necessary for moving machine 1 on the ground. Machine 1 comprises actuation devices, e.g. linear actuators such as jacks or rotary actuators such as motors, for actuating parts of the machine such as: mast 5, operating equipment 6, structural frame 3 or movable assembly 4. One or more actuation devices may be included, which may be *per* se known, such as an electric motor, a hydraulic motor, a hydraulic cylinder, an electric cylinder, etc. Conveniently, there are a plurality of actuation devices. For example, each actuation device is adapted to execute the relative movement of parts of machine 1.

Conveniently, machine 1 comprises braking devices for braking or stopping the movement of one or more parts of machine 1, e.g. mast 5, operating equipment 6, structural frame 3 or movable assembly 4. The braking devices may be hydraulic, e.g. they may include an overcenter valve, or other *per* se known devices. The braking devices may comprise at least one parking brake, in particular a mechanical one. Conveniently, there are a plurality of braking devices. For example, each braking device acts upon the relative motion of parts of machine 1. The braking devices are preferably adapted to brake the relative motion of and/or hold stationary parts of machine 1, or the machine itself. Therefore, the braking devices can brake the movements of machine 1 and/or hold the parts of machine 1 in a fixed mutual position.

The predetermined functions that machine 1 is adapted to perform when a human figure is recognized in the field of view comprise, without limitation, one or more of the following: emitting a signal representative of such recognition, emitting an alarm signal (e.g. an audible and/or luminous signal), stopping or braking movements of machine 1 or of parts thereof, preventing movements of machine 1 or of parts thereof. For example, the predetermined functions include interrupting and/or preventing the operation of the actuation devices, activating or keeping active the braking devices, etc. Conveniently, the control system is adapted to send a signal indicative of the presence of the human figure to a unit remote from machine 1, such as a control room, e.g. for generating an alarm. Preferably, the predetermined functions are performed by sending signals having priority over the commands issued by the operator.

Preferably, all or some of control devices 15 (described below) are mounted on machine 1. Alternatively, the operator can control machine 1 remotely via wireless communication. Preferably, the control system is mounted on machine 1.

Optionally, through appropriate settings of the control system, one or more predetermined functions may be performed only after a waiting time has elapsed, during which the operator can still control machine 1 normally. For example, it is possible to stop or brake movements of machine 1 or of parts thereof only after the operator, having been warned about the dangerous situation by an alarm signal, has not taken appropriate action during the waiting time.

In this example, movable assembly 4, in particular the tracked undercarriage, is driven by a hydraulic gear motor 30-A, connected to one of the toothed drive wheels of corresponding track 27, configured for exerting an actuation action according to a received control signal, and is so arranged that said actuation action will actuate the translatory movement of foundation machine 1, so that it can be moved within the building yard to reach the work area. Movable assembly 4 is braked by an overcenter valve 13-A configured for exerting, according to a received control signal, a braking action on the oil flow through said gear motor 30-A, thereby limiting the oil flow rate, so that said braking action will brake the translatory movement and stop the machine. Once the translatory movement has been stopped, an additional braking device 13-AA, typically a mechanical parking brake, is configured for exerting a parking braking action according to a received control signal, and is configured in a manner such that said parking braking action will hold the undercarriage in a fixed position. In particular, if the mechanical parking brake is a unit under negative hydraulic or electric control, the received control signal will be a null-value pressure, voltage or current signal.

Slewing ring 60 that mechanically and rotatably connects structural frame 3 and undercarriage 4 is conveniently driven by a hydraulic gear motor 30-B configured for exerting an actuation action according to a received control signal, and is configured in a manner such that said actuation action will actuate the rotational movement of structural frame 3 relative to undercarriage 4 about axis of rotation R. Said slewing ring 60 is braked by an overcenter valve 13-B configured for exerting, according to a received control signal, a braking action on the oil flor through gear motor 30-B, thereby limiting the oil flow rate, so that said braking action will brake the relative rotational movement and stop structural frame 3 upon reaching the desired rotated position. After stopping the rotation, an additional braking device 13-BB, typically a mechanical parking brake, is configured for exerting a parking braking action according to a received control signal, and is so arranged that said parking braking action will hold the frame in a fixed position. In particular, it is understood that, if the mechanical parking brake is a unit under negative hydraulic or electric control, the received control signal will be a null-value pressure or voltage or current signal.

Mast 5, in particular, is depicted as a boxed structure and is mechanically connected to frame 3 in proximity to a third side 23 thereof, i.e. in proximity to the front side of said frame 3. Mast 5 is mechanically connected to base machine 2, in particular to frame 3, by means of a kinematic mechanism 20. In particular, kinematic mechanism 20 can move mast 5 away or towards base machine 2 to change the working radius of machine 1 and/or change the inclination of said mast 5. In order to change the inclination, mast 5 is actuated by two hydraulic cylinders 30-C that exert an actuation action according to a received control signal, so that said actuation action will actuate the traverse motion of mast 5 relative to frame 3. Mast 5 is braked by two overcenter valves 13-C, configured to exert, according to a received control signal, a braking action on the oil flow through respective hydraulic cylinder 30-C, and arranged on the cylinder exhaust side, so that said braking action will brake the traverse motion and stop mast 5 at the desired angle.

Operating equipment 6 of Figure 1 comprises a rotary 7 and an interchangeable equipment, which in this example includes a drilling tool 8, in particular a drill bit, mechanically connected to telescopic kelly bars 9. Operating equipment 6 is mechanically associated with mast 5 both by means of a rope 10 that supports the interchangeable equipment on the pulleys at the top of mast 5 and by means of the guided mechanical connection between rotary 7 and mast 5. By way of example, the operating equipment 6 is driven by a hydraulic gear motor 30-D, installed on rotary 7 and configured for exerting an actuation action according to a received control signal, and is configured in a manner such that said actuation action will actuate the earth working movement. In addition, operating equipment 6 is driven by a gear motor of a hoist, not visible in the drawing, which moves rope 10 to cause interchangeable equipment 8 to move relative to mast 5 and go down into the soil to the desired depth. According to one possible variant, operating equipment 6 is a dynamic compaction equipment. In such a case, as is known, a steel mass is raised to a height close to the top of mast 5 and then released to impact the ground by gravity, thereby compacting it.

With particular reference to the plan view of Figure 2, there is shown a cabin 14, mechanically connected to structural frame 3 in a lateral position, i.e. in proximity to a first side 21 of frame 3 that constitutes a side panel, and in a forward position, i.e. in proximity to the third side 23 of frame 3 that constitutes the front part. Cabin 14 comprises a control station, i.e. a seat, and control devices 15, such as one or more joysticks and/or levers and/or pedals and/or HMI (Human-Machine Interface) interfaces, which are physically operated by the operator sitting in the control station in order to generate and send control signals for the purpose of controlling the movements of foundation machine 1, e.g. controlling the relative rotational movement of structural frame 3 and the translatory movement of the machine. In particular, a control unit 12 of the machine is operatively connected, e.g. via a signal connection, to control devices 15 to receive and, possibly after appropriate processing, send the operator control signals to the actuation devices (e.g. 30-A, 30-B, 30-C, 30-D) and/or to the braking devices (e.g. 13-A, 13-AA, 13-B, 13-BB, 13-C), so that they will actuate or brake the corresponding movement.

With reference to the first embodiment of the present invention shown in Figure 2, a video camera 11 is mounted to base machine 2 and, in particular, to structural frame 3, in proximity to one side thereof. Video camera 11 may be mounted to structural frame 3 either directly, via a mechanical connection to frame 3 itself, or indirectly, via a mechanical connection to any element, e.g. enclosures, walkway surfaces, support brackets, ballast, that stays integrally fixed to frame 3 when machine 1 is in operation. Video camera 11 may be, for example, a digital or matricial camera (i.e. a camera providing a digital image signal and equipped with an optical sensor, whose pixels, i.e. the elementary units typically comprising an optical element and electronic devices for generating and outputting a signal representative of the images acquired by such optical element, are arranged in a matrix of generic dimensions NxM.

In Figure 2, video camera 11 is mounted in proximity to the second side 22 of structural frame 3, which is substantially opposite to the first side 21, in proximity to which cabin 14 is connected. In particular, in Figure 2 video camera 11 is adapted to view a side 22 opposite to side 21 where cabin 14 is located.

In general, the at least one video camera 11 is preferably mounted to said base machine 2, preferably to structural frame 3, in proximity to any side 21, 22, 23, 24 of base machine 2, preferably of structural frame 3, and is so oriented as to frame the field of view to be monitored in proximity to said side 21, 22, 23, 24. In particular, reference is made herein to a plan view. The field of view to be monitored is, therefore, an area to be monitored in the vicinity of machine 1, and such area may include a part of machine 1 itself and/or a part of the ground around machine 1.

By way of non-limiting example, in Figure 2 video camera 11 is connected in proximity to that vertex of the frame which is formed by the intersection between the third side 23 and the second side 22. As an alternative, with reference to a plan view, video camera 11 may be mounted in proximity to any one of the vertices where the sides of structural frame 3 meet, or it may be mounted in proximity to the centre of any one of the sides.

Video camera 11 is so oriented as to frame a field of view that the operator has to monitor while physically operating control devices 15 in order to make and control a movement. In particular, in Figure 2 video camera 11 is so oriented as to frame the lateral field of view along the second side 22 of frame 3, but, as an alternative, it may be so oriented as to frame the front field of view of the machine. Alternatively, if video camera 11 is mounted to frame 3 in proximity to the fourth side 24, i.e. the rear or tail side, it may advantageously be mounted to frame 3 in proximity to the centre of said fourth side 24, and so oriented as to frame the rear field of view behind ballast 25, e.g. being mechanically connected on top of the ballast.

According to one embodiment, the at least one video camera 11 frames the field of view to be monitored with a field angle E greater than or equal to 60 degrees, preferably greater than or equal to 90 degrees. Video camera 11 frames the field of view with a depth of field G having a length greater than or equal to the length of the second side 22 or, likewise, of the first side 21 of structural frame 3, i.e. greater than or equal to the length of a side panel of machine 1, or of any one of the sides of base machine 2, and in particular of the sides of structural frame 3.

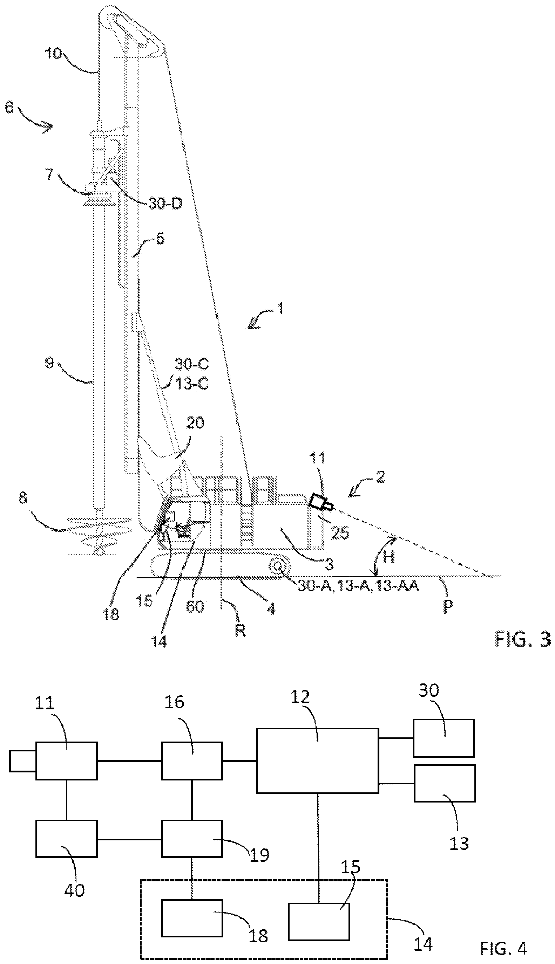

With particular reference to Figure 3, which shows one possible variant of the first embodiment, video camera 11 is oriented along a direction that forms, with respect to a plane P (e.g. a substantially horizontal plane), whereon machine 1 lies, an orientation angle H not exceeding 75°. Optionally, the orientation angle H may not exceed 60°, 45° or 30°. If there are multiple video cameras 11, one, some or all of video cameras 11 may have such an orientation. Preferably, video camera 11 is conveniently mounted at a distance not exceeding 6 meters from the ground on which machine 1 lies. Optionally, this distance may not exceed 3, 4 or 5 meters. If there are multiple video cameras 11, one, some or all of video cameras 11 may be arranged at such a distance. Preferably, video camera 11 is mounted to base machine 2, in particular to structural frame 3. Video camera 11 is, therefore, so mounted and oriented as to observe, in a perspective view, a human figure standing near machine 1. Thus, video camera 11 will not frame said human figure in a plan view, e.g. as would be the case if said video camera 11 were mounted on top of mast 5, in which case video camera 11 would be oriented in a substantially vertical direction. In fact, if video camera 11 were positioned too high and oriented vertically, it would be very difficult for the control system to recognize a human figure, since only the shape of the head and shoulders could be observed vertically from above.

Video camera 11 is configured for acquiring images of the framed field of view and for generating and sending a signal representative of such acquired images. By way of example, it will be understood that video camera 11 acquires the images by means of optical elements contained in the pixels that form its optical sensor, and generates and outputs the signal representative of such images, e.g. a digital signal, by means of suitable electronic devices.

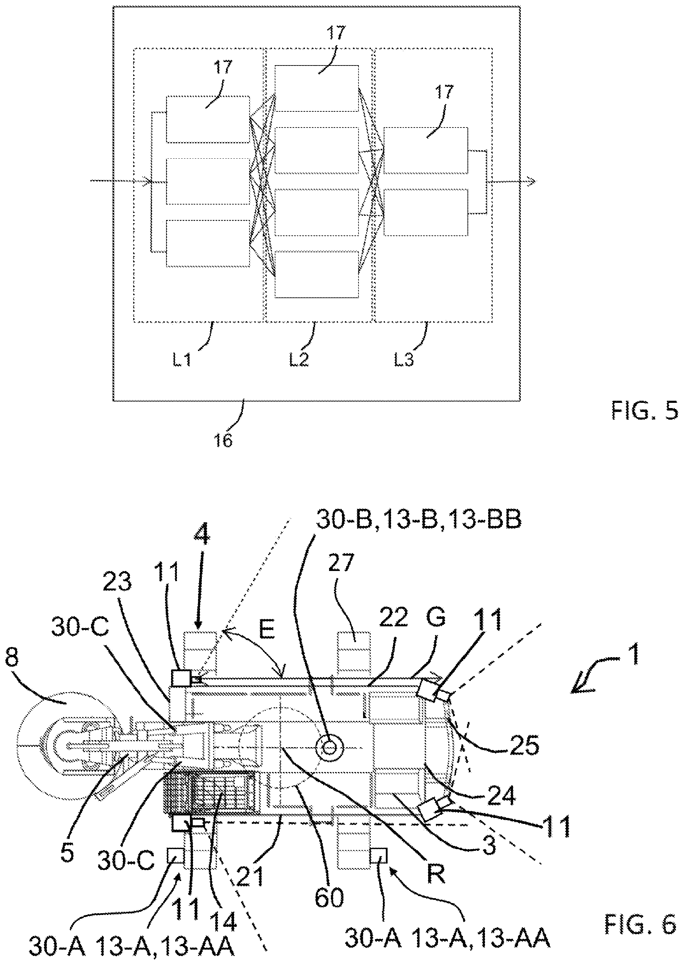

With reference to the preferred embodiment shown in Figure 4, the control system comprises an electronic processing system 16, e.g. a PC or an FPGA, which is operatively connected to video camera 11 in order to receive the signal representative of the acquired images. Electronic processing system 16 is configured to operate as a neural network. With reference to figure 5, electronic processing system 16 comprises processing devices 17, e.g. CPUs or logic blocks, configured for processing said signal representative of the images by executing computations mutually interconnected so as to constitute a neural network. In particular, processing devices 17 are configured for parallel processing of said signal representative of the images. In particular, processing devices 17 or the logic blocks are electronic devices that execute computations, e.g. arithmetic computations, based on Boolean algebra, and conveniently have a reconfigurable architecture. In other words, devices 17 are prearranged for changing, according to a different program file of electronic processing system 16, the type of computation to be carried out. In general, the control system, and in particular the electronic processing system, can be reconfigured.

Said neural network is trained to recognize a human figure in the images of the field of view acquired by video camera 11 and sent to the control system, in particular to electronic processing system 16, by means of the signal representative of the images.

Preferably, the control system is also configured for recognizing any darkened pixels in the signal representative of the images acquired by the at least one video camera 11. In particular, said neural network is also trained to recognize any darkened pixels in said signal representative of the images acquired by video camera 11. The presence of darkened pixels may be due to the actual presence of a stain, e.g. a mud stain, that is physically darkening a part of the field of view being framed by the video camera, or may be due to a malfunction of the optical element of the pixel involved or of the electronic devices that generate and output the signal representative of the acquired images.

Electronic processing system 16 is configured for automatically generating and sending, when the neural network recognizes a human figure in the acquired images, a first signal representative of such recognition. Preferably, said electronic processing system 16 is also configured for calculating the number of darkened pixels and for automatically generating and sending an alarm signal when the number of said darkened pixels exceeds a predefined maximum threshold value.

The control system preferably comprises a control unit 12 operatively connected to electronic processing system 16 for the purpose of receiving the first signal representative of the recognition of a human figure. Said control unit 12 processes said first signal representative of the recognition in order to generate and output, based on the first signal representative of the recognition, an automatic control signal for the execution of the predetermined functions of the machine. Therefore, the control system comprises at least control unit 12 and electronic processing system 16.

For example, the automatic control signal is sent to a braking device 13-A, 13-AA, 13-B, 13-BB, 13-C for braking a movement of the machine. In particular, it is to be understood that, when the neural network recognizes a human figure in the acquired images, control unit 12 may always send the automatic control signal to braking device 13-B or 13-BB, and may only send it also to braking device 13-A or 13-AA when video camera 11 is framing the rear field of view behind the fourth side 24. Alternatively, it may always send the automatic control signal to multiple devices controlling multiple movements of the machine. In general, the control system can send signals to trigger actions for one or more parts of machine 1.

Conveniently, the predetermined functions that are automatically performed following the recognition of a human figure (i.e. braking or stopping the movements of machine 1) have priority over any actions that may be requested via an active command imparted by the operator through control devices 15. The control system is adapted to guarantee such priority, in particular by sending a priority automatic control signal for performing such predetermined functions. The control system, in particular control unit 12, in particular the PLC, is preferably configured for giving transmission priority to said automatic control signal over the control signal generated by control devices 15 operated by the operator. Braking device 13-A, 13-AA, 13-B, 13-BB, 13-C exerts the braking action according to the automatic control signal in order to automatically brake a movement of foundation machine 1 on the basis of the recognition of a human figure in the images acquired by video camera 11.

If video camera 11 is mechanically connected to frame 3 in proximity to that vertex of the frame which is formed by the intersection between the third side 23 and the second side 22 and is so oriented as to frame the lateral field of view along the second side 22, the operator of the foundation machine will be able to make the rotational movement of frame 3 relative to undercarriage 4 while visually monitoring only the front field of view and the lateral field of view along the first side 21, after making sure that there are no people standing behind the fourth side 24 near the ballast. If a person is present within the field of view being framed by video camera 11, processing devices 17 will recognize a human figure, by means of the neural network implemented by the computations executed by them, and electronic processing system 16 will automatically generate and send the first signal representative of such recognition. Control unit 12 will receive such signal representative of the recognition and, if the relative rotational movement has not yet begun, it will send a priority automatic control signal to mechanical parking brake 13-BB to cause it to keep holding the frame in a fixed position; conversely, if the relative rotational movement has already begun, it will send the priority automatic control signal to overcenter valve 13-B in order to brake and stop the rotation. It is therefore to be understood that, even if the operator is physically actuating control devices 15 to send a control signal to gear motor 30-B and control the relative rotational movement, such movement will anyway be automatically stopped by the priority transmission of the automatic control signal.

If video camera 11 is mechanically connected to frame 3 in proximity to the fourth side 24, e.g. at the centre thereof, and is so oriented as to frame the rear field of view behind said fourth side 24, e.g. behind ballast 25, the operator of the foundation machine will be able to make the reverse translatory movement of the machine after making sure that there are no people under frame 3 and ballast 25. If a person is present within the field of view being framed by video camera 11, processing devices 17 will recognize a human figure, by means of the neural network implemented by the computations executed by them, and electronic processing system 16 will automatically generate and send the first signal representative of such recognition. Control unit 12 will receive such signal representative of the recognition and, if the translatory movement has not yet begun, it will send a priority automatic control signal to mechanical parking brake 13-AA to cause it to keep holding the undercarriage in a fixed position; conversely, if the translatory movement has already begun, it will send the priority automatic control signal to overcenter valve 13-A in order to brake and stop the translation. It is therefore to be understood that, even if the operator is physically actuating control devices 15 to send a control signal to gear motor 30-A and control the translatory movement, such movement will anyway be automatically stopped by the priority transmission of the automatic control signal.

In a first variant of the first embodiment, video camera 11 is mechanically connected to undercarriage 4 of base machine 2. In this case, for example, video camera 11 is so oriented as to frame the rear field of view underneath the fourth side 24, i.e. underneath frame 3 in its rear part. In a second variant of the first embodiment, foundation machine 1 comprises both a video camera 11 mechanically connected to structural frame 3 and a video camera 11 mechanically connected to movable assembly 4 or undercarriage. In particular, video camera 11 connected to movable assembly 4 is so oriented as to frame the rear field of view underneath frame 3 in its rear part. In this second variant, foundation machine 1 comprises two electronic processing systems 16, each one of which is electrically connected to corresponding video camera 11. Control unit 12 is electrically connected to both electronic processing systems 16 and, when the neural network recognizes a human figure in the acquired images, may always send an automatic control signal to braking device 13-B or 13-BB and only send it also to braking device 13-A or 13-AA when the human figure is recognized in the acquired images of the rear field of view behind the ballast or under the frame. Alternatively, it may always send the automatic control signal to multiple devices controlling multiple movements of the machine.

With reference to Figure 5, the following will illustrate a preferred embodiment of electronic processing system 16. In particular, such electronic processing system 16 is an FPGA and processing devices 17, only some of which are numbered in the drawing, are logic blocks. It is to be understood that each processing device 17 shown in Figure 5 may physically consist of a single logic block executing a certain group of computations of the neural network, or may consist of a set of logic blocks all dedicated to executing the same group of computations of the neural network; for simplicity, however, reference will be made in the following only to the case wherein processing device 17 consists of a single logic block. The logic blocks are physically interconnected within FPGA 16 via signal connections, so as to create an architecture, i.e. a scheme that will be followed in order to mutually interconnect the logic blocks via signal connections, of the "matrix" type or of the "tree" type, both reconfigurable. The architecture is prearranged for modifying, according to a different program file of electronic processing system 16, the scheme to be followed in order to mutually interconnect the output values of the computations carried out by some logic blocks with the input values necessary for the execution of the computations of other logic blocks. Such reconfigurable architecture is obtained, for example, by using switching elements prearranged for modifying, according to a different program file of electronic processing system 16, the connection between the output signals of some logic blocks and the input signals of other logic blocks.

Irrespective of the adopted architecture, the computations executed by the logic blocks are mutually interconnected via signal connections, so as to form a group of input logic blocks L1, one or more intermediate groups L2 and an output group L3. Through suitable input interfaces, electronic processing system 16 receives from video camera 11 the signal representative of the acquired images and sends it to logic blocks 17 of input group L1. Processing devices 17, or at least two of them, belonging to the same input group L1 process, preferably in parallel, the signal representative of the images in order to recognize a certain characteristic feature of the human figure, e.g. the features of a face, the ears, the eyes, the legs, the arms, the chest. To do so, each logic block, possibly in co-operation with computation blocks dedicated to specific operations or RAM memory blocks interconnected therewith via a signal connection, executes addition and multiplication computations, the result of which is affected by at least one weight factor whose optimal value is determined during a neural network training process. Preferably, such training is carried out beforehand, i.e. it is completed before foundation machine 1 is transported and delivered to the customer in the building yard, and hence before it is operatively used by the operator in the building yard, so that the operator can profitably employ his time by using the foundation machine for operative processing activities without first having to carry out any process that would imply wasting useful working time. The training of the neural network consists of a supervised or non-supervised learning process for learning the optimal value of the weight factor to be used in the computations executed by each logic block. During the training process, each logic block processes, by executing computations affected by a weight factor whose optimal value is initially unknown, a large number of images and videos including a person in different positions and environmental conditions. By using optimization algorithms, and with a reliability that increases with the number of images and videos employed, the process iteratively determines the optimal value of the weight factor used in the computations executed by each logic block. Such optimal value is that value of the weight factor which ensures a correct recognition of the presence or absence of a person in all the images and videos in use. The result of the weighted computations executed by a logic block is sent as input to a lookup table to return the value of an activation function that constitutes the optimal output value of the logic block and represents its optimized estimate of the recognition of a given characteristic feature of a human figure. Each logic block sends, via the signal connection, its own optimal output value to one or more logic blocks of the next group, e.g. of intermediate group L2.

By repeating the above-described optimization process for all groups of logic blocks, an optimal output value of output group L3 is obtained, which is representative of the recognition of a human figure in the images acquired by video camera 11, and which is based on optimal output values of the logic blocks belonging to previous groups. Through the training process it is possible to optimize, in addition to the value of the weight factors to be used in the computations, also the scheme to be followed in order to mutually interconnect the computations carried out by the logic blocks. In particular, the training process generates a program file for electronic processing system 16, which contains at least the programming of the optimal values of the weight factors and of the interconnections among the computations, and which can be directly executed either on electronic processing system 16, if the training process has been carried out directly on electronic processing system 16, or on an external device, e.g. a mainframe computer, and subsequently transferred to electronic processing system 16 by loading it into a memory unit of the latter. It will be appreciated, therefore, that the recognition of the presence of a person in the images acquired by video camera 11 is based on an optimized estimate of the recognition of certain characteristic features of the human figure. Electronic processing system 16 is then configured for sending, possibly after appropriate processing, the first signal representative of such recognition.

Alternatively, if electronic processing system 16 is a PC, processing devices 17 are CPUs configured for processing said signal by executing computations whose results will be mutually interconnected so as to constitute a neural network, and such results will be affected by at least one weight factor whose value has been determined beforehand by training the neural network. In particular, at least one CPU executes sequential computations similar to the sequential computations executed by at least one other CPU, so that at least two processing devices 17 will implement the neural network by processing, preferably in parallel with each other, the signal representative of the images. It is also to be understood that, both in the case wherein electronic processing unit 16 is an FPGA and in the case wherein it is a PC, it will be possible to use a plurality of electronic processing systems 16 mutually connected via a signal connection, e.g. in cascade, so as to increase the overall capability of execution of the interconnected computations that constitute the neural network, e.g. in order to increase the number of intermediate groups L2.

With reference to Figure 4, it also shows a video modulator 19, e.g. a PAL analogue modulator, connected to electronic processing system 16 via a signal connection, and a display 18, e.g. an analogue display, operatively connected to video modulator 19. Display 18 is conveniently installed inside cabin 14. Video modulator 19 is configured for receiving and converting the signal representative of the acquired images, e.g. for converting it from digital to analogue, for executing a coding of the colour of such images according to the PAL standard, and for sending such signal representative of the images, suitably converted and coded, to display 18. it is therefore to be understood that, by means of the signal representative of the images, received from electronic processing system 16, video modulator 19 is electrically associated with video camera 11 in an indirect manner, but, as an alternative, it may be connected to video camera 11 in such a way as to receive the signal representative of the images directly from the video camera itself, thus being electrically associated therewith in a direct manner. Display 18 is configured for receiving said signal representative of the images from video modulator 19 for the purpose of showing the images acquired by video camera 11 on a screen to the operator as the latter is physically operating control devices 15. Display 18 is also operatively connected, e.g. via a signal connection, to electronic processing system 16 either in an indirect manner, if video modulator 19 is connected to electronic processing system 16, or in a direct manner, if video modulator 19 is connected to video camera 11. Preferably, electronic processing system 16 is also configured for generating and sending to display 18, when the neural network recognizes a human figure in the images acquired by video camera 11, a second signal representative of the recognition of the human figure. For example, the second representative signal is a signal that generates a visual and/or luminous alarm in the images being shown on the screen of display 18; for example, the screen may show the human figure enclosed in a luminous rectangle. As an alternative or in addition, electronic processing system 16 may send the second signal representative of the recognition to an audio signalling device, e.g. a buzzer, and the second representative signal may be a signal that generates an alarm sound which can be heard by the machine operator.

According to a particular embodiment, by means of the second signal representative of the recognition, machine 1 of the present invention may initially warn the operator via a visual and/or audible signal, and then, should the operator not exert the braking action with sufficient intensity, it may intervene by automatically braking the dangerous movement.

The particular embodiment shown in Figure 4 also includes a video recorder 40, which in this example is connected to video camera 11 via a signal connection, although it may alternatively be connected to electronic processing system 16. It is therefore to be understood that video recorder 40 is electrically associated with video camera 11 either directly, if connected to video camera 11, or indirectly, if connected to electronic processing system 16. Video recorder 40 is configured for receiving the signal representative of the images acquired by the at least one video camera 11 and for storing said images. In particular, video recorder 40 is also electrically associated with video modulator 19 via a signal connection for showing such images on the screen of display 18 at a later time following the acquisition thereof by video camera 11.

With reference to Figure 6, there is shown a foundation machine 1 in accordance with a second embodiment of the present invention. In the following, only those aspects which differ from the above-described first embodiment will be illustrated in detail, since all other aspects and variants remain unchanged. In particular, foundation machine 1 in accordance with the second embodiment comprises a plurality of video cameras 11, i.e. at least two. Preferably, video cameras 11 are mounted to base machine 2, and in particular to structural frame 3. In the preferred example, the base machine, and in particular structural frame 3, has a polygonal, in particular rectangular or square, shape when viewed from above. Conveniently, video cameras 11 (four in the example of Figure 6) are each connected in proximity to a vertex of said frame 3. Conveniently, each video camera 11 is located in proximity to a vertex or a side 21, 22, 23, 24 of structural frame 3. There are a plurality of electronic processing systems 16, each one operatively connected to a corresponding video camera 11. In a preferred variant, video cameras 11 are four, each one mechanically connected in proximity to one of the four vertices of structural frame 3. With reference to Figure 6, machine 1 comprises: two video cameras 11, each one so oriented as to frame the field of view to be monitored in proximity to a respective side 21, 22, and two video cameras 11 so oriented as to frame the field of view to be monitored in proximity to a further side 24. In particular, sides 21, 22 are the longest ones, i.e. those constituting the two side panels of machine 1. One video camera 11 frames side 21 and the other one frames side 22, while the other two video cameras 11 frame side 24, which in particular is the one that is farthest from cabin 14, i.e. the rear or tail side of machine 1.

At any rate, in the second embodiment it is possible to use, in addition to the plurality of video cameras 11 in proximity to the vertices of frame 3, also one or more video cameras 11 mounted to movable assembly 4. In particular, such additional video cameras 11 are so oriented as to frame the field of view underneath frame 3, e.g. in its rear part (which in particular is the area under the ballast that is substantially opposite to cabin 14 in a plan view).

In particular, video cameras 11 frame different fields of view. Optionally, the fields of view may partially overlap. For example, video cameras 11 are oriented and configured in such a way that one human figure can be seen, at least partially, by more than one video camera 11. Conveniently, video cameras 11 are so arranged as to allow displaying an area surrounding machine 1, preferably monitoring a perimeter around machine 1. Video cameras 11 may also frame a portion of machine 1.

Each electronic processing system 16 is configured for receiving the signal representative of the images acquired by the corresponding video camera 11 and for sending a first signal representative of the recognition of a human figure when it recognizes a human figure in the images acquired by the corresponding video camera 11. Each electronic processing system 16 is configured for operating as a neural network. It will therefore be appreciated that, in the preferred variant, control unit 12 receives the first signal representative of the recognition of a human figure from the four electronic processing systems 16, and is configured for generating and sending a priority automatic control signal to a braking device for braking a movement of the machine on the basis of at least one of such first representative signals. In general, when at least one of video cameras 11 recognizes a human figure, the control system is configured for executing the predetermined functions of machine 1. In particular, upon such recognition control unit 12 is configured for commanding the execution of the predetermined functions. Conveniently, display 18 is configured for receiving the signal representative of the images acquired by video cameras 11 in order to show such images simultaneously on a screen, possibly by dividing the screen into four distinct zones.

The invention also relates to a method for controlling a foundation machine 1 configured for drilling the ground for structural foundation elements or retaining elements, said machine comprising:
- a base machine 2 adapted to move foundation machine 1 on the ground, said base machine 2 comprising a structural frame 3 and a movable assembly 4;
- a mast 5, mechanically connected to base machine 2, whereon an operating equipment 6 is adapted to be mounted in order to drill the ground;
- at least one video camera 11, mounted to base machine 2 and so oriented as to frame a field of view to be monitored; said method being characterized in that it comprises the steps of:
- recognizing, through a neural network, when said at least one video camera 11 is framing a human figure in the field of view, and
- in case of presence of said human figure, executing some predetermined functions of foundation machine 1.

The predetermined functions may be those previously mentioned herein, i.e.: emitting a signal representative of such recognition, emitting an alarm signal, stopping or braking movements of machine 1 or of parts thereof, preventing movements of machine 1 or of parts thereof.

Further functional and structural details have already been described above and, for brevity's sake, will not be repeated below, but should be considered to be applicable to the present method.

In particular, the above-described steps are carried out by means of the control system configured for operating as a neural network, and as previously described herein. The control system may be mounted on machine 1.

It is clear that the above-described foundation machine may be subject to many modifications and variations, which will all fall within the same inventive concept.

For example, the foundation machine of the present invention may have structural frame 3 of base machine 2 mechanically connected to movable assembly 4 in a fixed, as opposed to rotatable, manner. During a reverse translatory movement, the operator sitting in cabin 14 will nevertheless still have to monitor the rear field of view behind ballast 25 and the rear field of view under ballast 25, i.e. under frame 3. As a further example, the control assembly may also be a remote control, a mobile device or a remote control station. During a relative rotational movement of frame 3, the operator will nevertheless still have to visually monitor, simultaneously, the whole field of view in the vicinity of the machine.

Foundation machine 1 according to the present invention solves the problems suffered by prior-art foundation machines, being more effective in preventing and avoiding the risk of hitting or crushing a person standing in the vicinity of the machine during the execution of a movement.

The use of at least one video camera and one electronic processing system configured for automatically sending a first signal representative of the recognition of a human figure allows the operator to simultaneously monitor the fields of view in proximity to multiple sides of the structural frame. For example, if the video camera is connected along the second side of the frame to monitor the lateral field of view along that side, the operator will be able to simultaneously monitor the front field of view and the field of view along the first side. The use of a video camera having an appropriate resolution will provide a detailed view of the field of view to be monitored, regardless of the distance of such video camera from the operator, and the use of a display will make it possible to constantly show to the operator such detailed view of the field of view to be monitored. In addition, since the training of the neural network is advantageously carried out with the machine in operation, and therefore also during the working activities typically performed by such machine, said neural network will be able to recognize a human figure even in the presence of the vibrations that are typically imposed on the structural frame during such working activities. Furthermore, since said neural network is trained to recognize any darkened pixels and the electronic processing system is configured for calculating the number of such pixels and automatically sending an alarm signal when such number exceeds a predefined maximum number, the operator will be warned whenever the ability of the video camera to monitor the field of view may be impaired. Advantageously, it is also conceivable that the alarm signal which is automatically sent by the electronic processing system when the number of darkened pixels exceeds a predefined maximum number is received by the control system in order to send an automatic control signal and stop the movements of the machine, so that it will no longer be possible for the operator to execute a machine movement without having solved the problem first. In general, when the number of darkened pixels exceeds a predefined maximum value, the control system will send a signal to have the machine perform one or more predetermined functions. Said neural network may advantageously be trained even in poor natural lighting conditions and in strong reflected light conditions, thus allowing the recognition of a human figure even in conditions in which a person's sight is dangerously reduced. Due to the automatic transmission of the first representative signal by the electronic processing system and the priority transmission of the automatic control signal by the control system, the braking system will brake a movement of the machine automatically, i.e. without requiring a physical actuation of the control devices by the operator, thereby permitting the execution of an emergency stop without it being dependent on the operator's reaction time. In addition, the automatic control signal may advantageously command a braking action in such a way that it will be executed with the maximum admissible intensity, e.g. by optimizing the braking intensity according to the type of movement to be stopped and according to the technology in use, thus allowing the execution of an optimal emergency stop without it being dependent on the intensity with which the operator actuates the control devices. Through the parallel processing of the signal representative of the images by the processing devices belonging to one same group of devices, it is advantageously possible to maximize the speed of execution of the mutually interconnected computations that constitute the neural network, because the processing devices that process the signal in parallel will execute the respective computations in substantially the same time interval. This provides the advantage that the recognition of a human figure can be effected in real time, i.e. in a sufficiently short time compatible with the time necessary for executing an emergency stop. By minimizing the response times for commanding the emergency stop, and by optimizing the intensity of the braking action, the foundation machine of the present invention permits stopping a movement within a sufficiently small space to avoid hitting or crushing a person in the vicinity of the machine. Through the use of logic blocks it is possible to adopt a reconfigurable architecture, i.e. an architecture prearranged for modifying the type of computation to be executed by the single logic blocks, as well as the scheme to be followed for mutually interconnecting the computations, resulting in the advantage that changes can be easily made when implementing upgrades or additional functions, e.g. if one wants to increase the number of intermediate groups or mutually interconnect multiple electronic processing systems in order to increase the computational capability.

With a video camera mechanically connected along the fourth, i.e. rear, side of the frame, e.g. at the centre or in proximity to a vertex thereof, and a video camera mechanically connected to the undercarriage, it will be advantageously possible to avoid using an assistant standing near the machine to guide the operator by means of gestures during the reverse translatory movement, thus avoiding potential hitting and crushing risks as well as the risk of a wrong interpretation of gesture-based communications. In addition, the video camera mechanically connected to the undercarriage makes it possible to recognize, with the utmost reliability, a human figure that may be present underneath the structural frame, in low-visibility areas difficult to observe by an assistant. The angle of orientation of the video camera and its mechanical connection to the structural frame allow framing the field of view from a reduced height from the ground, just slightly higher than a person, e.g. 3-4 meters, so that it is possible to frame a person frontally or laterally in his/her entirety, i.e. to frame all the characteristic features of the human figure, so as to ensure the utmost reliability of the recognition of the human figure that is effected by the neural network. In particular, the reduced height and the angle of orientation H not exceeding 75° advantageously allow the control system to recognize the human figure more easily, because it is possible to observe numerous characteristic features of the human body, such as, for example, chest, legs, arms, head or the features of a face. This minimizes both the so-called false positives and the so-called false negatives, thus avoiding emitting an alarm or stopping machine 1 when an object or an animal enters the area being monitored, while at the same time always ensuring the detection of a person, resulting in increased efficiency and safety of machine 1. Moreover, the mechanical connection to the structural frame turns out to be advantageous to allow monitoring the field of view during a rotational movement of the frame relative to the undercarriage, because such mechanical connection is fixed and directly integral with the machine part that is executing the dangerous movement, making the positioning and orientation of the video cameras independent of the working configuration of the machine, e.g. independent of the inclination of the mast and the working radius of the machine. In addition, the mechanical connection to structural frame 3 or to movable assembly 4 (e.g. the undercarriage) permits connecting video camera 11 to an extremely rigid element of the machine, only subject to small deformations and movements under load, so that the deformations and movements of the machine part to which the video camera is mechanically connected will not substantially affect the field of view being framed by the video camera when the machine is under load.

Preferably, video camera 11 frames the field of view with a field angle greater than or equal to 60 degrees; such characteristic is also known as "wide angle". Preferably, video camera 11 frames the field of view with a depth of field greater than or equal to the length of a side panel or any one of sides 21, 22, 23, 24 of base machine 2, in particular of structural frame 3. It is thus possible to frame the entire field of view that needs to be monitored and to use just one video camera per side of the machine.

The use of a video recorder advantageously allows storing the images acquired by the video camera, so that they can examined at a later time, e.g. in order to detect any disallowed and dangerous behaviour of yard assistants and other personnel and take appropriate countermeasures to increase the safety of the construction site.

When four video cameras are employed, mechanically connected to the frame in proximity to each vertex, it will be advantageously possible to monitor the entire lateral and rear fields of view of the frame during its relative rotational movement, because the vertices essentially represent the outermost points of the machine at the sides and at the rear. Lastly, it is clear that the foundation machine thus conceived may be subject to numerous modifications and variations; furthermore, all details may be replaced with other technically equivalent elements. In practice, the materials employed, as well as the dimensions, may change according to specific technical requirements.

## Claims

1. Foundation machine (1) configured for drilling the ground for structural foundation elements or retaining elements, said machine comprising:
- a base machine (2) comprising a structural frame (3) and a movable assembly (4) for moving the machine (1) on the ground;
- a mast (5), mechanically connected to the base machine (2), whereon an operating equipment (6) is adapted to be mounted in order to drill the ground;
- at least one video camera (11), mounted to the base machine (2) and so oriented as to frame a field of view to be monitored;
- a control system operatively connected to the at least one video camera (11) in order to receive a signal representative of images acquired by the video camera (11),
said foundation machine (1) being **characterized in that** said control system comprises a neural network trained to recognize a human figure in the images acquired by the video camera (11), for recognizing when said at least one video camera (11) is framing a human figure in the monitored field of view; wherein, if the neural network recognizes a human figure, the control system is configured for having the foundation machine (1) perform some predetermined functions.

2. Foundation machine (1) according to claim 1, wherein the at least one video camera (11) is mounted to said structural frame (3) in proximity to any side (21, 22, 23, 24) or any vertex of the structural frame (3), wherein the at least one video camera (11) is so oriented as to frame the field of view to be monitored in proximity to said side (21, 22, 23, 24) .

3. Foundation machine (1) according to claim 2, wherein the at least one video camera (11) frames the field of view to be monitored with a depth of field (G) having a length greater than or equal to the length of any one of the sides (21, 22, 23, 24) of the structural frame (3).

4. Foundation machine (1) according to any one of the preceding claims, wherein at least one video camera (11) is mounted to the movable assembly (4) of said base machine (2), wherein said at least one video camera (11) is so oriented as to frame a field of view to be monitored, such field of view being underneath the structural frame (3).

5. Foundation machine (1) according to any one of the preceding claims, wherein the predetermined functions that the control system is configured for having the machine (1) execute when a human figure is recognized in the field of view are executed by sending signals having priority over the commands issued by the operator, and comprise one or more of the following functions: emitting a signal representative of such recognition, emitting an alarm signal, stopping or braking movements of the machine (1) or of parts thereof, preventing movements of the machine (1) or of parts thereof.

6. Foundation machine (1) according to any one of the preceding claims, wherein the at least one video camera (11) is oriented along a direction that forms, with respect to a plane (P) whereon the machine (1) lies, an orientation angle (H) not exceeding 75°.

7. Foundation machine (1) according to any one of the preceding claims, wherein the at least one video camera (11) frames the field of view to be monitored with a field angle (E) greater than or equal to 60°.

8. Foundation machine (1) according to any one of the preceding claims, wherein the at least one video camera (11) is mounted at a distance from the ground not exceeding 6 meters.

9. Foundation machine (1) according to any one of the preceding claims, wherein the control system is configured for recognizing any darkened pixels in a signal representative of the images acquired by the at least one video camera (11) and for sending a signal in order to have the machine (1) execute one or more predetermined functions when the number of said darkened pixels exceeds a predefined threshold value.

10. Foundation machine (1) according to any one of the preceding claims, wherein the control system comprises at least one electronic processing system (16) operatively connected to the at least one video camera (11) for the purpose of receiving a signal representative of the acquired images; wherein the electronic processing system (16) comprises a plurality of processing devices (17) configured for processing said signal by executing computations mutually interconnected so as to constitute the neural network.

11. Foundation machine (1) according to claim 10, wherein said processing devices (17) are configured for parallel processing of said signal representative of the images.

12. Foundation machine (1) according to claim 10 or 11, wherein said processing devices (17) consist of logic blocks, and said at least one electronic processing system (16) has a reconfigurable architecture.

13. Foundation machine (1) according to any one of the preceding claims, comprising a plurality of video cameras (11) .

14. Foundation machine (1) according to claim 13, wherein each video camera (11) is mounted in proximity to a vertex or a side (21, 22, 23, 24) of the structural frame (3).

15. Foundation machine (1) according to claim 13, comprising: two video cameras (11), each one so oriented as to frame the field of view to be monitored in proximity to a respective side (21, 22), and two video cameras (11) so oriented as to frame the field of view to be monitored in proximity of an additional side (24).

16. Foundation machine (1) according to claim 13, wherein the control system comprises a plurality of electronic processing systems (16), each one operatively connected to a respective video camera (11) and configured for recognizing a human figure being framed by such video camera (11).

17. Foundation machine (1) according to any one of the preceding claims, comprising a video recorder (40) configured for receiving a signal representative of the images acquired by the at least one video camera (11) and for storing said images.

18. Method for controlling a foundation machine (1) configured for drilling the ground for structural foundation elements or retaining elements according to any one of the preceding claims, said machine comprising:
- a base machine (2) adapted to move the foundation machine (1) on the ground, said base machine (2) comprising a structural frame (3) and a movable assembly (4);
- a mast (5), mechanically connected to the base machine (2), whereon an operating equipment (6) is adapted to be mounted in order to drill the ground;
- at least one video camera (11), mounted to the base machine (2) and so oriented as to frame a field of view to be monitored;
said method being **characterized in that** it comprises the steps of:
- recognizing, through a neural network, when said at least one video camera (11) is framing a human figure in the field of view, and
- in case of presence of said human figure, executing some predetermined functions of the foundation machine (1).

## Patentansprüche

1. Fundamentmaschine (1), die zum Bohren des Bodens für strukturelle Fundamentelemente oder Halteelemente ausgelegt ist, wobei die Maschine Folgendes umfasst:
- eine Basismaschine (2), die einen Strukturrahmen (3) und eine bewegliche Baugruppe (4) zum Bewegen der Maschine (1) auf dem Boden umfasst;
- einen Mast (5), der mechanisch mit der Basismaschine (2) verbunden ist, an dem eine Betriebsausrüstung (6) zum Bohren des Bodens montiert werden kann;
- wenigstens eine Videokamera (11), die an der Basismaschine (2) montiert und so ausgerichtet ist, dass sie ein zu überwachendes Sichtfeld erfasst;
- ein Steuersystem, das operativ mit der wenigstens einen Videokamera (11) verbunden ist, um ein Signal zu empfangen, das für von der Videokamera (11) aufgenommene Bilder repräsentativ ist,
die Fundamentmaschine (1) ist **dadurch gekennzeichnet, dass** das Steuersystem ein neuronales Netzwerk umfasst, das darauf trainiert ist, eine menschliche Figur in den von der Videokamera (11) aufgenommenen Bildern zu erkennen, um zu erkennen, wenn die wenigstens eine Videokamera (11) eine menschliche Figur in dem überwachten Sichtfeld erfasst; wobei, wenn das neuronale Netzwerk eine menschliche Figur erkennt, das Steuersystem so ausgelegt ist, dass die Fundamentmaschine (1) einige vorgegebene Funktionen ausführt.

2. Fundamentmaschine (1) nach Anspruch 1, wobei die wenigstens eine Videokamera (11) an dem Strukturrahmen (3) in der Nähe einer beliebigen Seite (21, 22, 23, 24) oder eines beliebigen Scheitelpunkts des Strukturrahmens (3) montiert ist, wobei die wenigstens eine Videokamera (11) so ausgerichtet ist, dass sie das zu überwachende Sichtfeld in der Nähe der Seite (21, 22, 23, 24) erfasst.

3. Fundamentmaschine (1) nach Anspruch 2, wobei die wenigstens eine Videokamera (11) das zu überwachende Sichtfeld mit einer Schärfentiefe (G) erfasst, die eine Länge größer oder gleich der Länge einer beliebigen Seite (21, 22, 23, 24) des Strukturrahmens (3) aufweist.

4. Fundamentmaschine (1) nach einem der vorhergehenden Ansprüche, wobei an der beweglichen Baugruppe (4) der Basismaschine (2) wenigstens eine Videokamera (11) montiert ist, wobei die wenigstens eine Videokamera (11) so ausgerichtet ist, dass sie ein zu überwachendes Sichtfeld erfasst, wobei sich das Sichtfeld unterhalb des Strukturrahmens (3) befindet.

5. Fundamentmaschine (1) nach einem der vorhergehenden Ansprüche, wobei die vorgegebenen Funktionen, die das Steuersystem die Maschine (1) veranlassen soll auszuführen, wenn eine menschliche Figur im Sichtfeld erkannt wird, durch Senden von Signalen ausgeführt werden, die Vorrang vor den vom Bediener erteilten Befehlen haben, und eine oder mehrere der folgenden Funktionen umfassen: Ausgeben eines Signals, das eine solche Erkennung repräsentiert, Ausgeben eines Alarmsignals, Anhalten oder Bremsen von Bewegungen der Maschine (1) oder von Teilen davon, Verhindern von Bewegungen der Maschine (1) oder von Teilen davon.

6. Fundamentmaschine (1) nach einem der vorhergehenden Ansprüche, wobei die wenigstens eine Videokamera (11) entlang einer Richtung ausgerichtet ist, die in Bezug auf eine Ebene (P), auf der die Maschine (1) liegt, einen Ausrichtungswinkel (H) von höchstens 75° bildet.

7. Fundamentmaschine (1) nach einem der vorhergehenden Ansprüche, wobei die wenigstens eine Videokamera (11) das zu überwachende Sichtfeld mit einem Feldwinkel (E) größer oder gleich 60° erfasst.

8. Fundamentmaschine (1) nach einem der vorhergehenden Ansprüche, wobei die wenigstens eine Videokamera (11) in einem Abstand vom Boden montiert ist, der 6 Meter nicht überschreitet.

9. Fundamentmaschine (1) nach einem der vorhergehenden Ansprüche, wobei das Steuersystem dazu ausgelegt ist, jegliche abgedunkelten Pixel in einem Signal zu erkennen, das die von der wenigstens einen Videokamera (11) aufgenommenen Bilder repräsentiert, und ein Signal zu senden, um die Maschine (1) dazu zu veranlassen, eine oder mehrere vorgegebene Funktionen auszuführen, wenn die Anzahl der abgedunkelten Pixel einen vorgegebenen Schwellwert überschreitet.

10. Fundamentmaschine (1) nach einem der vorhergehenden Ansprüche, wobei das Steuersystem wenigstens ein elektronisches Verarbeitungssystem (16) umfasst, das operativ mit der wenigstens einen Videokamera (11) verbunden ist, um ein Signal zu empfangen, das die aufgenommenen Bilder repräsentiert; wobei das elektronische Verarbeitungssystem (16) eine Vielzahl von Verarbeitungsgeräten (17) umfasst, die zum Verarbeiten des Signals durch Ausführen von Berechnungen ausgelegt sind, die miteinander verbunden sind, um das neuronale Netzwerk zu bilden.

11. Fundamentmaschine (1) nach Anspruch 10, wobei die Verarbeitungsgeräte (17) zur parallelen Verarbeitung des die Bilder repräsentierenden Signals ausgelegt sind.

12. Fundamentmaschine (1) nach Anspruch 10 oder 11, wobei die Verarbeitungsgeräte (17) aus Logikblöcken bestehen und das wenigstens eine elektronische Verarbeitungssystem (16) eine rekonfigurierbare Architektur aufweist.

13. Fundamentmaschine (1) nach einem der vorhergehenden Ansprüche, umfassend eine Vielzahl von Videokameras (11).

14. Fundamentmaschine (1) nach Anspruch 13, wobei jede Videokamera (11) in der Nähe eines Scheitelpunkts oder einer Seite (21, 22, 23, 24) des Strukturrahmens (3) montiert ist.

15. Fundamentmaschine (1) nach Anspruch 13, umfassend: zwei Videokameras (11), die jeweils so ausgerichtet sind, dass sie das zu überwachende Sichtfeld in der Nähe einer jeweiligen Seite (21, 22) erfassen, und zwei Videokameras (11), die so ausgerichtet sind, dass sie das zu überwachende Sichtfeld in der Nähe einer weiteren Seite (24) erfassen.

16. Fundamentmaschine (1) nach Anspruch 13, wobei das Steuersystem eine Vielzahl elektronischer Verarbeitungssysteme (16) umfasst, die jeweils operativ mit einer jeweiligen Videokamera (11) verbunden sind und zum Erkennen einer menschlichen Figur ausgelegt sind, die von einer solchen Videokamera (11) erfasst wird.

17. Fundamentmaschine (1) nach einem der vorhergehenden Ansprüche, die einen Videorecorder (40) umfasst, der zum Empfangen eines Signals, das die von der wenigstens einen Videokamera (11) aufgenommenen Bilder repräsentiert, und zum Speichern dieser Bilder ausgelegt ist.

18. Verfahren zum Steuern einer Fundamentmaschine (1), die nach einem der vorherigen Ansprüche zum Bohren des Bodens für strukturelle Fundamentelemente oder Halteelemente ausgelegt ist, wobei die Maschine Folgendes umfasst:
- eine Basismaschine (2), die zum Bewegen der Fundamentmaschine (1) auf dem Boden angepasst ist, wobei die Basismaschine (2) einen Strukturrahmen (3) und eine bewegliche Baugruppe (4) umfasst;
- einen Mast (5), der mechanisch mit der Basismaschine (2) verbunden ist, auf der eine Betriebsausrüstung (6) zum Bohren des Bodens montiert werden kann;
- wenigstens eine Videokamera (11), die an der Basismaschine (2) montiert und so ausgerichtet ist, dass sie ein zu überwachendes Sichtfeld erfasst;
das Verfahren ist **dadurch gekennzeichnet, dass** es die folgenden Schritte umfasst:
- Erkennen, durch ein neuronales Netzwerk, wenn die wenigstens eine Videokamera (11) eine menschliche Figur im Sichtfeld erfasst, und
- im Falle der Anwesenheit der menschlichen Figur, Ausführen einiger vorgegebener Funktionen der Fundamentmaschine (1).

## Revendications

1. Machine de fondation (1) configurée pour forer le sol pour des éléments de fondation structurels ou des éléments de retenue, ladite machine comprenant :
- une machine de base (2) comprenant un cadre structurel (3) et un ensemble mobile (4) pour déplacer la machine (1) sur le sol ;
- un mât (5), relié mécaniquement à la machine de base (2), un équipement d'exploitation (6) étant adapté pour être monté sur celui-ci afin de forer le sol ;
- au moins une caméra vidéo (11), montée sur la machine de base (2) et orientée de manière à cadrer un champ de vision à surveiller ;
- un système de commande connecté de manière fonctionnelle à la au moins une caméra vidéo (11) afin de recevoir un signal représentatif d'images acquises par la caméra vidéo (11),
ladite machine de fondation (1) étant **caractérisée en ce que**
ledit système de commande comprend un réseau neuronal entraîné à reconnaître une figure humaine dans les images acquises par la caméra vidéo (11), pour reconnaître lorsque ladite au moins une caméra vidéo (11) cadre une figure humaine dans le champ de vision surveillé ; dans laquelle, si le réseau neuronal reconnaît une figure humaine, le système de commande est configuré pour que la machine de base (1) exécute certaines fonctions prédéterminées.

2. Machine de fondation (1) selon la revendication 1, dans laquelle la au moins une caméra vidéo (11) est montée sur ledit cadre structurel (3) à proximité de tout côté (21, 22, 23, 24) ou de tout sommet du cadre structurel (3), dans laquelle la au moins une caméra vidéo (11) est orientée de manière à cadrer le champ de vision à surveiller à proximité dudit côté (21, 22, 23, 24).

3. Machine de fondation (1) selon la revendication 2, dans laquelle la au moins une caméra vidéo (11) cadre le champ de vision à surveiller avec une profondeur de champ (G) présentant une longueur supérieure ou égale à la longueur de l'un quelconque des côtés (21, 22, 23, 24) du cadre structurel (3).

4. Machine de fondation (1) selon l'une quelconque des revendications précédentes, dans laquelle au moins une caméra vidéo (11) est montée sur l'ensemble mobile (4) de ladite machine de base (2), dans laquelle ladite au moins une caméra vidéo (11) est orientée de manière à cadrer un champ de vision à surveiller, ce champ de vision étant situé sous le cadre structurel (3).

5. Machine de fondation (1) selon l'une quelconque des revendications précédentes, dans laquelle les fonctions prédéterminées, selon lesquelles le système de commande est configuré pour que la machine (1) s'exécute lorsqu'une figure humaine est reconnue dans le champ de vision, sont exécutées en envoyant des signaux ayant priorité sur les instructions délivrées par l'opérateur, et comprennent une ou plusieurs des fonctions suivantes consistant à : émettre un signal représentatif d'une telle reconnaissance, émettre un signal d'alarme, arrêter ou freiner des mouvements de la machine (1) ou de parties de celle-ci, empêcher des mouvements de la machine (1) ou de parties de celle-ci.

6. Machine de fondation (1) selon l'une quelconque des revendications précédentes, dans laquelle la au moins une caméra vidéo (11) est orientée le long d'une direction qui forme, par rapport à un plan (P) sur lequel la machine (1) se trouve, un angle d'orientation (H) ne dépassant pas 75°.

7. Machine de fondation (1) selon l'une quelconque des revendications précédentes, dans laquelle la au moins une caméra vidéo (11) cadre le champ de vision à surveiller avec un angle de champ (E) supérieur ou égal à 60°.

8. Machine de fondation (1) selon l'une quelconque des revendications précédentes, dans laquelle la au moins une caméra vidéo (11) est montée à une distance du sol ne dépassant pas 6 mètres.

9. Machine de fondation (1) selon l'une quelconque des revendications précédentes, dans laquelle le système de commande est configuré pour reconnaître tout pixel assombri dans un signal représentatif des images acquises par la au moins une caméra vidéo (11) et pour envoyer un signal afin que la machine (1) exécute une ou plusieurs fonctions prédéterminées lorsque le nombre desdits pixels assombris dépasse une valeur de seuil prédéfinie.

10. Machine de fondation (1) selon l'une quelconque des revendications précédentes, dans laquelle le système de commande comprend au moins un système de traitement électronique (16) connecté de manière fonctionnelle à la au moins une caméra vidéo (11) dans le but de recevoir un signal représentatif d'images acquises ; dans laquelle le système de traitement électronique (16) comprend une pluralité de dispositifs de traitement (17) configurés pour traiter ledit signal en exécutant des calculs mutuellement interconnectés de manière à constituer le réseau neuronal.

11. Machine de fondation (1) selon la revendication 10, dans laquelle lesdits dispositifs de traitement (17) sont configurés pour un traitement en parallèle dudit signal représentatif des images.

12. Machine de fondation (1) selon la revendication 10 ou 11, dans laquelle lesdits dispositifs de traitement (17) sont constitués de blocs logiques, et ledit au moins un système de traitement électronique (16) présente une architecture reconfigurable.

13. Machine de fondation (1) selon l'une quelconque des revendications précédentes, comprenant une pluralité de caméras vidéo (11).

14. Machine de fondation (1) selon la revendication 13, dans laquelle chaque caméra vidéo (11) est montée à proximité d'un sommet ou d'un côté (21, 22, 23, 24) du cadre structurel (3).

15. Machine de fondation (1) selon la revendication 13, comprenant : deux caméras vidéo (11), chacune orientée de manière à cadrer le champ de vision à surveiller à proximité d'un côté respectif (21, 22), et deux caméras vidéo (11) orientées de manière à cadrer le champ de vision à surveiller à proximité d'un côté supplémentaire (24).

16. Machine de fondation (1) selon la revendication 13, dans laquelle le système de commande comprend une pluralité de systèmes de traitement électroniques (16), chacun étant connecté de manière fonctionnelle à une caméra vidéo respective (11) et configuré pour reconnaître une figure humaine cadrée par une telle caméra vidéo (11).

17. Machine de fondation (1) selon l'une quelconque des revendications précédentes, comprenant un enregistreur vidéo (40) configuré pour recevoir un signal représentatif des images acquises par la au moins une caméra vidéo (11) et pour stocker lesdites images.

18. Procédé de commande d'une machine de fondation (1) configurée pour forer le sol pour des éléments de fondation structurels ou des éléments de retenue selon l'une quelconque des revendications précédentes, ladite machine comprenant :
- une machine de base (2) adaptée pour déplacer la machine de fondation (1) sur le sol, ladite machine de base (2) comprenant un cadre structurel (3) et un ensemble mobile (4) ;
- un mât (5), relié mécaniquement à la machine de base (2), un équipement d'exploitation (6) étant adapté pour être monté sur celui-ci, afin de forer le sol ;
- au moins une caméra vidéo (11), montée sur la machine de base (2) et orientée de manière à cadrer un champ de vision à surveiller ;
ledit procédé étant **caractérisé en ce qu'**il comprend les étapes consistant à :
- reconnaître, à travers un réseau neuronal, lorsque ladite au moins une caméra vidéo (11) cadre une figure humaine dans le champ de vision, et
- en cas de présence de ladite figure humaine, exécuter certaines fonctions prédéterminées de la machine de fondation (1).
